# EUROPEAN PATENT APPLICATION

(11) **EP 4 046 732 A1**
(43) Date of publication of application: **24.08.2022**
(21) Application number: 19949173.9
(22) Date of filing: 15.10.2019
(51) Int. Cl.: B23B 51/00

(54) **DRILL**

(71) Applicant: Sumitomo Electric Hardmetal Corp., Itami-shi, Hyogo 664-0016 (JP)
(72) Inventor: JINDAI, Masaaki, Itami-shi, Hyogo 664-0016 (JP); TSUTSUMI, Yuki, Itami-shi, Hyogo 664-0016 (JP)
(74) Representative: Boult Wade Tennant LLP
(86) International application number: PCT/JP2019/040474
(87) International publication number: WO 2021/074958

(57) **Abstract**

The drill is rotatable about a central axis. The drill includes a central axis, a front end and a rear end opposite to each other in a direction along the central axis, an outer peripheral surface, a cutting edge formed at the front end and extending from the outer peripheral surface toward the central axis, a flank face contiguous with the cutting edge, a flute formed on the outer peripheral surface and extending spirally around the central axis from the front end toward the rear end, and a thinning rake face contiguous with the flute. The cutting edge has a main cutting edge extending from the outer peripheral surface and a thinning cutting edge contiguous with an end of the main cutting edge away from the outer peripheral surface. The flute includes a main rake face contiguous with the main cutting edge from the opposite side of the flank face. The thinning rake face is contiguous with the thinning cutting edge from the opposite side of the flank face. The thinning rake face is flush with the main rake face. The angle formed by the main rake face and the central axis is not less than -18° and not more than 7°. The width of the main rake face is not less than 0.07 mm and not more than 1.5 mm.

## Description

### TECHNICAL FIELD

The present disclosure relates to a drill.

### BACKGROUND ART

For example, PTL 1 (Japanese Patent Laying-Open No. 7-80714) discloses a drill. The front end of the drill disclosed in PTL 1 is formed with a cutting edge.

The drill disclosed in PTL 1 is rotatable about the central axis so as to drill a hole with the cutting edge.

The cutting edge of the drill disclosed in PTL 1 includes a portion formed by a ridgeline between the front end face and the chip discharge groove (hereinafter, referred to as a "main cutting edge") and a portion formed by a ridgeline between the front end face and the thinning face (hereinafter, referred to as a "thinning cutting edge"). In the drill of PTL 1, the main cutting edge is honed (hereinafter, a surface formed by honing is referred to as a "main rake face").

In the drill according to PTL 1, the width of the main rake face is not less than 0.01 mm and not more than 0.05 mm. In the drill according to PTL 1, the angle formed by the main rake face and the central axis is -30° or more and -20° or less.

### CITATION LIST

### PATENT LITERATURE

PTL 1: Japanese Patent Laying-Open No. 7-80714

### SUMMARY OF INVENTION

The drill according to the present disclosure is rotatable about a central axis, and includes a front end and a rear end opposite to each other in a direction along the central axis, an outer peripheral surface, a cutting edge formed at the front end and extending from the outer peripheral surface toward the central axis, a flank face contiguous with the cutting edge, a flute formed on the outer peripheral surface and extending spirally around the central axis from the front end toward the rear end, and a thinning rake face contiguous with the flute. The cutting edge has a main cutting edge extending from the outer peripheral surface and a thinning cutting edge contiguous with an end of the main cutting edge away from the outer peripheral surface. The flute includes a main rake face contiguous with the main cutting edge from the opposite side of the flank face. The thinning rake face is contiguous with the thinning cutting edge from the opposite side of the flank face. The thinning rake face is flush with the main rake face. An angle formed by the main rake face and the central axis is not less than -18° and not more than 7°. The width of the main rake face is 0.07 mm or more and 1.5 mm or less.

### BRIEF DESCRIPTION OF DRAWINGS

Fig. 1 is a side view of a drill 10;
Fig. 2 is an enlarged side view of the drill 10 in the vicinity of the front end 10a;
Fig. 3 is a front view of the drill 10;
Fig. 4 is a cross-sectional view of the drill 10 taken along a direction perpendicular to the central axis A;
Fig. 5 is a cross-sectional view taken along line V-V in Fig. 3 and rotated by 180° in the clockwise direction;
Fig. 6 is a cross-sectional view taken along line VI-VI in Fig. 3 and rotated by 180° in the clockwise direction; and
Fig. 7 is a schematic view illustrating a cutting process using the drill 10.

### DETAILED DESCRIPTION

### [Problem to be Solved by the Present Disclosure]

In the drill disclosed in PTL 1, the width of the main rake face is as small as 0.01 mm or more and 0.05 mm or less. Therefore, the chips cut out from the workpiece by the main cutting edge may contact the flute beyond the main rake face, and thereby may cause crater wear in the flute. The crater wear in the flute may cause defects in the vicinity of the cutting edge. Further, in the drill disclosed in PTL 1, since the angle formed by the main rake face and the central axis is not less than -30° and not more than -20°, the chips cut out from the workpiece by the main cutting edge are greatly curled, and thereby, the temperature in the vicinity of the main cutting edge is likely to rise, which affects the durability of the cutting edge.

In the drill disclosed in PTL 1, it is not specified whether or not the thinning cutting edge is honed. In the case where the main cutting edge and the thinning cutting edge are honed by separate grinding steps, it is necessary to shorten the manufacturing process for the drill disclosed in PTL 1.

The present disclosure provides a drill capable of suppressing crater wear in a flute, improving the durability of a main cutting edge, and simplifying a manufacturing process.

### [Advantageous Effect of the Present Disclosure]

According to the drill of the present disclosure, it is possible to suppress the crater wear in the flute, improve the durability of the main cutting edge, and simplify the manufacturing process.

### [Description of Embodiments]

First, embodiments of the present disclosure will be described.

(1) A drill according to an embodiment of the present disclosure is rotatable about a central axis, and includes a front end and a rear end opposite to each other in a direction along the central axis, an outer peripheral surface, a cutting edge formed at the front end and extending from the outer peripheral surface toward the central axis, a flank face contiguous with the cutting edge, a flute formed on the outer peripheral surface and extending spirally around the central axis from the front end toward the rear end, and a thinning rake face contiguous with the flute. The cutting edge has a main cutting edge extending from the outer peripheral surface and a thinning cutting edge contiguous with an end of the main cutting edge away from the outer peripheral surface. The flute includes a main rake face contiguous with the main cutting edge from the opposite side of the flank face. The thinning rake face is contiguous with the thinning cutting edge from the opposite side of the flank face. The thinning rake face is flush with the main rake face. The angle formed by the main rake face and the central axis is not less than -18° and not more than 7°. The width of the main rake face is not less than 0.07 mm and not more than 1.5 mm.

In the drill of the above (1), since the width of the main rake face is 0.07 mm or more and 1.5 mm or less, the chips cut out from the workpiece by the main cutting edge are less likely to come into contact with the flutes. Further, in the drill of the above (1), since the main rake face and the thinning rake face are flush with each other, the main rake face and the thinning rake face may be formed in a single grinding step.

Further, in the drill of the above (1), since the angle formed by the main rake face and the central axis is -18° or more and 7° or less, the chips cut out from the workpiece by the main cutting edge are hard to curl greatly. As a result, the temperature rise in the main cutting edge during the cutting is suppressed, which makes it possible to improve the durability of the main cutting edge. In the drill of the above (1), since the width of the main rake face is 0.07 mm or more and 1.5 mm or less, which is relatively large, the strength of the main cutting edge may be maintained even if the angle formed by the main rake face and the central axis is increased as large as - 18° or more and 7° or less.

(2) In the drill according to the above (1), it is acceptable that the angle formed by the main rake face and the flank face is 75° or more and 100° or less.

(3) In the drill according to the above (1) or (2), it is acceptable that the core increment of the cutting edge is 0.05 times or more and 0.12 times or less of the diameter of the drill.

According to the drill of the above (3), the cutting resistance between the cutting edge and the workpiece is reduced, which makes it possible to further suppress the temperature rise in the vicinity of the cutting edge.

(4) In the drill according to any one of (1) to (3), it is acceptable that the cutting edge is roundly honed, and the radius of curvature of the cutting edge is 0.015 mm or more and 0.3 mm or less.

According to the cutting tool of (4), it is possible to ensure the sharpness of the cutting edge while maintaining the strength thereof.

(5) The drills (1) to (4) may be used to drill low carbon steel.

### [Details of Embodiments]

Hereinafter, the details of embodiments of the present disclosure will be described with reference to the drawings. In the following drawings, the same or corresponding portions are denoted by the same reference numerals, and the description thereof will not be repeated.

### (Configuration of Drill)

Hereinafter, the configuration of a drill (hereinafter referred to as "drill 10") according to an embodiment will be described.

The drill 10 is, for example, used to drill a workpiece made of low carbon steel. The low carbon steel refers to such a steel that has a carbon concentration of 0.25% by weight or less. As an example of low carbon steel, SCM415 defined in the JIS standard may be given.

The drill 10 is made of, for example, a cemented carbide. A cemented carbide is a sintered material of metal carbide grains containing a binder. The metal carbide grains are, for example, tungsten carbide (WC) grains, and the binder is, for example, cobalt (Co).

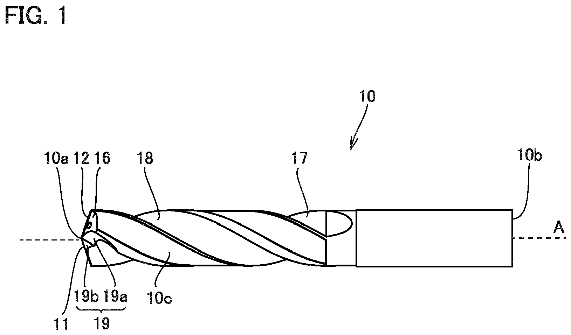

Fig. 1 is a side view of the drill 10. As illustrated in Fig. 1, the drill 10 has a central axis A and is rotatable about the central axis A. The drill 10 has a front end 10a and a rear end 10b. The front end 10a and the rear end 10b are two ends of the drill 10 in a direction along the central axis A. The rear end 10b is arranged opposite to the front end 10a.

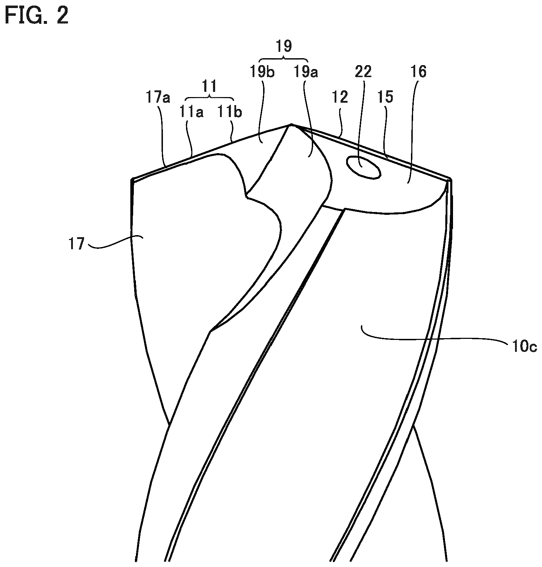

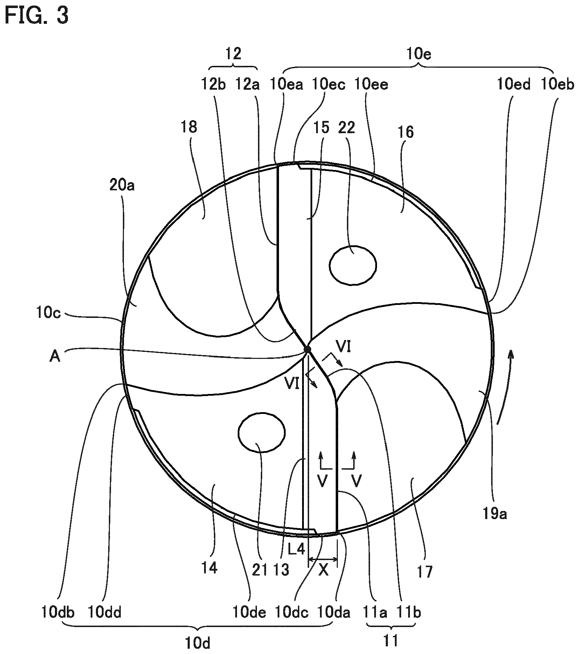

Fig. 2 is an enlarged side view of the drill 10 in the vicinity of the front end 10a. Fig. 3 is a front view of the drill 10. The rotation direction of the drill 10 is indicated by an arrow in Fig. 3. As illustrated in Figs. 2 and 3, the drill 10 has an outer peripheral surface 10c.

The outer peripheral surface 10c includes a land 10d and a land 10e. The land 10d and the land 10e each is a portion on the outer peripheral surface 10c where a flute 17 or a flute 18 to be described later is not formed.

The land 10d has a leading edge 10da and a heel 10db. The leading edge 10da is an edge of the land 10d closer to the flute 17. The heel 10db is an edge of the land 10d separated away from the leading edge 10da. The land 10d includes a first margin 10dc, a second margin 10dd, and a second chamfer 10de.

The land 10e has a leading edge 10ea and a heel 10eb. The leading edge 10ea is an edge of the land 10e closer to the flute 18. The heel 10db is an edge of the land 10e separated away from the leading edge 10ea. The land 10e includes a first margin 10ec, a second margin 10ed, and a second chamfer 10ee.

The first margin 10dc is contiguous with the leading edge 10da. The second margin 10dd is contiguous with the heel 10db. The second chamfer lOde is located between the first margin 10dc and the second margin 10dd. The first margin 10dc and the second margin 10dd protrude in the radial direction than the second chamfer lOde. In other words, a step is formed on the outer peripheral surface 10c at the boundary between the first margin 10dc and the second chamfer lOde and at the boundary between the second margin 10dd and the second chamfer lOde, respectively.

The first margin 10ec is contiguous with the leading edge 10ea. The second margin 10ed is contiguous with the heel 10eb. The second chamfer 10ee is located between the first margin 10ec and the second margin 10ed. The first margin 10ec and the second margin 10ed protrude in the radial direction than the second chamfer 10ee. In other words, a step is formed on the outer peripheral surface 10c at the boundary between the first margin 10ec and the second chamfer 10ee and at the boundary between the second margin 10ed and the second chamfer 10ee, respectively.

In the above, it is described that the land 10d has a second margin 10dd and the second land 10e has a second margin 10ed, the land 10d may not have the land 10e and the second land 10e may not have the second margin 10ed.

The drill 10 has a cutting edge 11 and a cutting edge 12. The cutting edge 11 and the cutting edge 12 are formed at the front end 10a. The cutting edge 11 is formed at the front end 10a and extends from an end of a ridgeline between the flute 17 and the outer peripheral surface 10c toward the central axis A. The cutting edge 12 is formed at the front end 10a and extends from the outer peripheral surface 10c toward the central axis A. It should be noted that the end of the cutting edge 11 or the cutting edge 12 away from the outer peripheral surface 10c is not necessary to reach the central axis A.

The cutting edge 11 has a main cutting edge 11a and a thinning cutting edge 11b. The main cutting edge 11a extends from the outer peripheral surface 10c. The thinning cutting edge 11b is contiguous with the end of the main cutting edge 11a away from the outer peripheral surface 10c.

The cutting edge 12 has a main cutting edge 12a and a thinning cutting edge 12b. The main cutting edge 12a extends from the outer peripheral surface 10c. The thinning cutting edge 12b is contiguous with an end of the main cutting edge 12a that is away from the outer peripheral surface 10c.

The drill 10 further includes a first flank face 13 and a second flank face 14, a first flank face 15 and a second flank face 16, a flute 17 and a flute 18, a thinning face 19 and a thinning face 20, and an oil hole 21 and an oil hole 22.

The first flank face 13 is contiguous with the cutting edge 11. The second flank face 14 is contiguous with the first flank face 13 from the other side of the cutting edge 11. The first flank face 15 is contiguous with the cutting edge 12. The second flank face 16 is contiguous with the first flank face 15 from the other side of the cutting edge 12.

The flute 17 and the flute 18 are formed on the outer peripheral surface 10c. Each of the flute 17 and the flute 18 extends spirally around the central axis A from the front end 10a toward the rear end 10b. Chips (not shown) cut by the cutting edge 11 and the cutting edge 12 are discharged out through the flute 17 and the flute 18.

A portion of the flute 17 contiguous with the main cutting edge 11a constitutes a main rake face 17a, and a portion of the flute 18 contiguous with the main cutting edge 12a constitutes a main rake face 18a (not shown). In other words, the main rake face 17a is contiguous with the main cutting edge 11a from the side opposite to the first flank face 13, and the main rake face 18a is contiguous with the main cutting edge 12a from the side opposite to the first flank face 15. In other words, the main cutting edge 11a is formed by the ridgeline between the main rake face 17a and the first flank face 13, and the main cutting edge 12a is formed by the ridgeline between the main rake face 18a and the first flank face 15.

The thinning face 19 and the thinning face 20 are formed to reduce the core thickness of the drill 10 at the front end 10a (i.e., formed by thinning the front end 10a). For example, the thinning face 19 and the thinning face 20 are formed by performing an R thinning on the front end 10a.

The thinning face 19 has a thinning heel face 19a and a thinning rake face 19b. The thinning heel face 19a is contiguous with the second flank face 16 and the flute 17. In other words, the thinning heel face 19a is one face of the thinning face 19 that is located closer to the heel 10eb.

The thinning rake face 19b is contiguous with the thinning cutting edge 11b from the side opposite to the first flank face 13. In other words, the thinning cutting edge 11b is formed by the ridgeline between the first flank face 13 and the thinning rake face 19b. The thinning rake face 19b extends along the central axis A. The thinning rake face 19b is contiguous with the main rake face 17a (the flute 17) and the thinning heel face 19a.

The thinning face 20 has a thinning heel face 20a and a thinning rake face 20b (not shown). The thinning heel face 20a is contiguous with the second flank face 14 and the flute 18. In other words, the thinning heel face 20a is one face of the thinning face 20 that is located closer to the heel 10db.

The thinning rake face 20b is contiguous with the thinning cutting edge 12b from the side opposite to the first flank face 15. In other words, the thinning cutting edge 12b is formed by ridgeline between the first flank face 15 and the thinning rake face 20b. The thinning rake face 20b extends along the central axis A. The thinning rake face 20b is contiguous with the main rake face 18a (the flute 18) and the thinning heel face 20a.

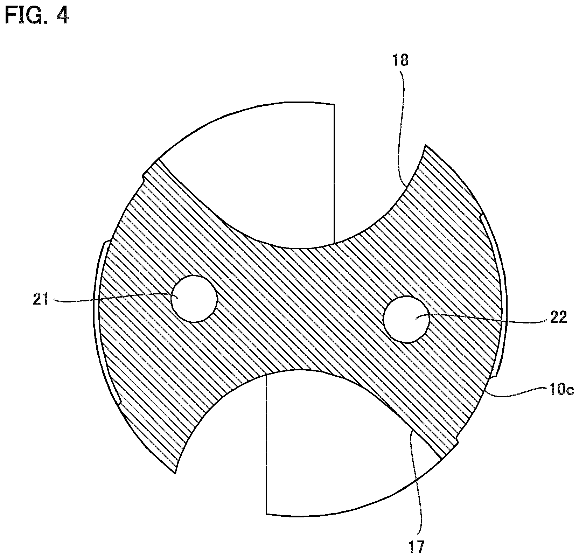

Fig. 4 is a cross-sectional view of the drill 10 taken along a direction perpendicular to the central axis A. As illustrated in Fig. 4, the oil hole 21 and the oil hole 22 are formed inside the drill 10. The oil hole 21 opens on the second flank face 14, and the oil hole 22 opens on the second flank face 16 (see Fig. 3). The oil hole 21 and the oil hole 22 extend from the front end 10a to the rear end 10b while twisting in accordance with the spiral form of the flute 17 and the flute 18 inside the drill 10. The drill 10 may not be provided with the oil hole 21 and the oil hole 22.

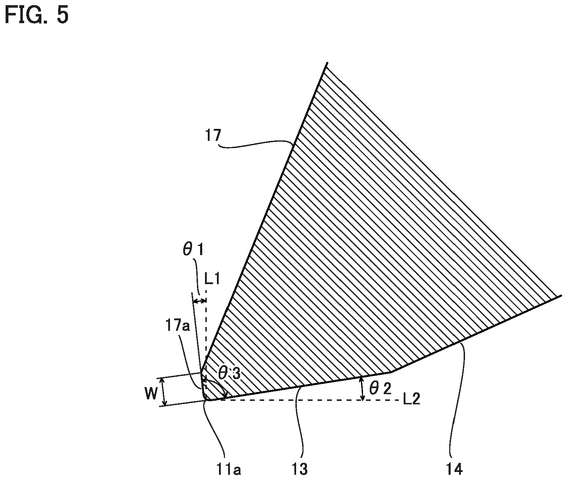

Fig. 5 is a cross-sectional view taken along line V-V in Fig. 3 and rotated by 180° in the clockwise direction. As illustrated in Fig. 5, the main rake face 17a and the central axis A form an angle θ1. In other words, when an imaginary straight line that is parallel to the central axis A and passes through the cutting edge 11 (the main cutting edge 11a) is defined as a straight line L1, the angle formed by the main rake face 17a and the straight line L1 is θ1.

Suppose that in a cross section P5 including the straight line L1 and orthogonal to the main cutting edge 11a in the front view of the drill 10 viewed from the front end 10a toward the rear end 10b, when the front end 10a is defined to face downward in the direction of the straight line L1, the rear end 10b is defined to face upward in the direction of the straight line L1, the main rake face 17a is defined to face leftward, and the first flank face 13 is defined to face downward, if the angle θ1 is formed by rotating the main rake face 17a counterclockwise with respect to the straight line L1, the angle θ1 takes a negative value; and if the angle θ1 is formed by rotating the main rake face 17a clockwise with respect to the straight line L1, the angle θ1 takes a positive value. Fig. 5 is an example of the cross section P5. In Fig. 5, the angle θ1 takes a negative value.

In the cross section P5, when an imaginary straight line orthogonal to the straight line L1 and passing through the main cutting edge 11a is defined as a straight line L2, the first flank face 13 and the straight line L2 form an angle θ2. Suppose that in the cross section P5, when the front end 10a is defined to face downward in the direction of the straight line L1, the rear end 10b is defined to face upward in the direction of the straight line L1, the main rake face 17a is defined to face leftward, and the first flank face 13 is defined to face downward, if the angle θ2 is formed by rotating the first flank face 13 counterclockwise with respect to the straight line L2, the angle θ2 takes a negative value; and if the angle θ2 is formed by rotating the first flank face 13 clockwise with respect to the straight line L2, the angle θ2 takes a positive value. In Fig. 5, the angle θ2 takes a negative value. The main rake face 17a and the first flank face 13 form an angle θ3. The angle θ3 takes a positive value.

The angle θ1 is not less than -18° and not more than 7°. The angle θ3 is preferably not less than 75° and not more than 100°. Since the angle θ3 is calculated by the expression of (90°- θ2 + θ1), the angle θ2 may be appropriately determined in accordance with the desired angle θ3.

The main rake face 17a has a width W. The width W is the length of the main rake face 17a in the cross section P5. In other words, in the cross section P5, the width W is the distance from an intersection point formed between the main rake face 17a and the flute 17 to the first flank face 13. The width W is not less than 0.07 mm and not more than 1.5 mm. The main cutting edge 11a may be roundly honed. When the main cutting edge 11a is roundly honed, the radius of curvature of the main cutting edge 11a is, for example, 0.015 mm or more and 0.3 mm or less.

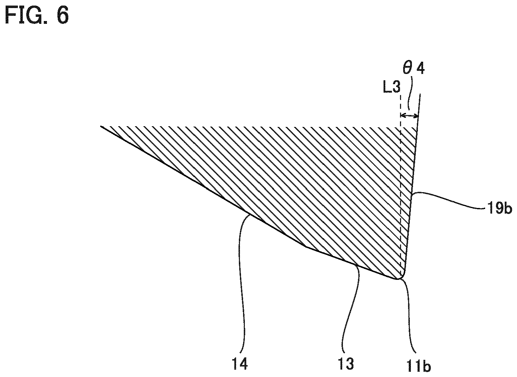

Fig. 6 is a cross-sectional view taken along line VI-VI in Fig. 3 and rotated by 180° in the clockwise direction. As illustrated in Fig. 6, the thinning rake face 19b and the central axis A form an angle θ4. In other words, when an imaginary straight line that is parallel to the central axis A and passes through the cutting edge 11 (the thinning cutting edge 11b) is defined as a straight line L3, the thinning rake face 19b and the straight line L3 form an angle θ4. The angle θ4 is equal to the angle θ1. In other words, the main rake face 17a and the thinning rake face 19b are flush with each other. The thinning cutting edge 11b may be roundly honed.

Although not shown in the drawings, the angle formed by the main rake face 18a and the central axis A (in other words, the angle formed by the main rake face 18a and an imaginary straight line parallel to the central axis A and passing through the main cutting edge 12a) is equal to the angle θ1. The main rake face 18a is flush with the thinning rake face 20b. Further, the angle formed by the first flank face 15 and the main rake face 18a is equal to the angle θ3.

Although not shown in the drawings, the main rake face 18a has a width of not less than 0.07 mm and not more than 1.5 mm. The cutting edge 12 (the main cutting edge 12a and the thinning cutting edge 12b) may be roundly honed to have a radius of curvature of 0.015 mm or more and 0.3 mm or less.

As illustrated in Fig. 3, a core increment X of the cutting edge 11 is preferably 0.05 times or more and 0.12 times or less the diameter of the drill 10. The diameter of the drill 10 is the diameter of a circumscribed circle of the drill 10 in the front view. The core increment X is a distance between an imaginary straight line (linear line L4) parallel to the cutting edge 11 on the side of the outer peripheral surface 10c and passing through the central axis A and the cutting edge 11 on the side of the outer peripheral surface 10c.

### (Effect of Drill)

Hereinafter, the effect of the drill 10 will be described.

In the drill 10, the width W is as large as 0.07 mm or more and 1.5 mm or more. Therefore, in the drill 10, the chips cut out from the workpiece are less likely to come into contact with the flute 17, which suppresses the crater wear in the flute 17.

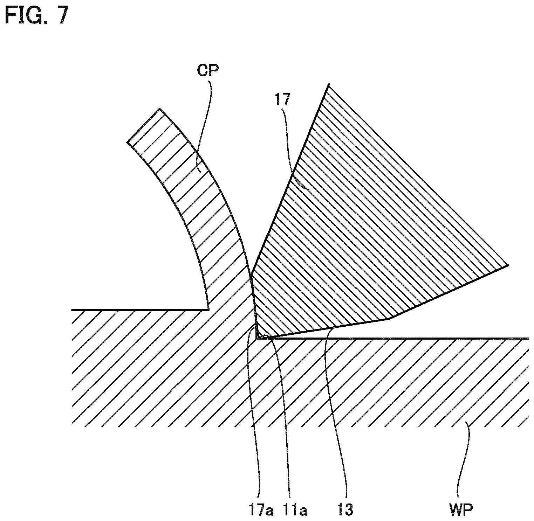

Fig. 7 is a schematic view illustrating a cutting process using the drill 10. In the drill 10, since the angle θ1 is as large as -18° or more and 7° or less, as illustrated in Fig. 7, the chips CP cut out from the workpiece WP by the main cutting edge 11a are not greatly curled when coming into contact with the main rake face 17a. In the drill 10, since the chips CP are not greatly curled when coming into contact with the main rake face 17a, the heat generated by the friction between the flute 17 and the chips CP is suppressed. Therefore, according to the drill 10, the heat generated in the vicinity of the main cutting edge 11a is suppressed, which improves the durability of the main cutting edge 11a.

Since the width W of the drill 10 is set as large as 0.07 mm or more and 1.5 mm or less, it is possible to maintain the strength of the main cutting edge 11a even when the angle θ1 is set to -18° or more and 7° or less.

In the drill 10, the angle θ1 is equal to the angle θ4 (i.e., the main rake face 17a and the thinning rake face 19b are flush with each other). Therefore, according to the drill 10, the main rake face 17a and the thinning rake face 19b may be formed in a single grinding step.

In the drill 10, the core increment X is not less than 0.05 times and not more than 0.12 times the diameter of the drill 10, which makes it possible to further suppress the temperature rise in the vicinity of the cutting edge 11. In the drill 10, the cutting edge 11 is roundly honed to have a radius of curvature of 0.015 mm or more and 0.3 mm or less, which makes it possible to ensure the sharpness of the cutting edge 11 while maintaining the strength thereof.

### (Cutting Test)

Hereinafter, a cutting test performed to confirm the effect of the drill 10 will be described.

### <Sample Used in Cutting Test>

The angle θ1 of samples 1 to 6 was set in the range of -18° to 7°, and the angle θ3 of samples 1 to 6 was set in the range of 100° to 75°.

The angle θ1 of samples 7 to 10 was set in the range of -38° to -23°, and the angle θ3 of samples 7 to 10 was set in the range of 120° to 105°. The angle θ1 of samples 11 to 13 was set in the range of 12° to 22°, and the angle θ3 of samples 11 to 13 was set in the range of 70° to 60°.

The parameters other than the angle θ1 and the angle θ3 were common to samples 1 to 13. More specifically, the angle θ2 was set at 8°, the diameter of the drill was set at 15 mm, and the width W was set at 0.4 mm. The parameters of samples 1 to 13 are listed in Table 1.

**[Table 1]**

| | Angle θ1 (°) | Angle θ2 (°) | Angle θ3 (°) | Width W (mm) | Drill Diameter (mm) |
|---|---|---|---|---|---|
| sample 1 | -18 | 8 | 100 | 0.4 | 15 |
| sample 2 | -13 | | 95 | | |
| sample 3 | -8 | | 90 | | |
| sample 4 | -3 | | 85 | | |
| sample 5 | 2 | | 80 | | |
| sample 6 | 7 | | 75 | | |
| sample 7 | -38 | | 120 | | |
| sample 8 | -33 | | 115 | | |
| sample 9 | -28 | | 110 | | |
| sample 10 | -23 | | 105 | | |
| sample 11 | 12 | | 70 | | |
| sample 12 | 17 | | 65 | | |
| sample 13 | 22 | | 60 | | |

### <Cutting Parameters>

The cutting parameters were set common to samples 1 to 13. More specifically, the cutting speed was set at 80 mm/min, the feeding speed was set at 0.3 mm/rev, the cutting depth (the depth of a hole to be formed via the cutting) was set at 150 mm, and SCM415 defined in the JIS standard was used as the workpiece WP. The cutting parameters are listed in Table 2.

### <Test Results>

The durability of each of samples 1 to 13 was evaluated by evaluating the number of holes cut by each sample. The number of cut holes was evaluated by the number of holes cut by each sample until the cutting was impossible to continue due to the breakage or the like of each sample.

As listed in Table 2, when the cutting was performed using samples 1 to 6, the number of holes cut by each sample was 1000 or more. On the other hand, when the cutting was performed using samples 7 to 13, the number of holes cut by each sample was 800 or less.

**[Table 2]**

| | Cutting Speed (mm/min) | Feeding Speed (mm/rev) | Cutting Depth (mm) | Workpiece | Number of Cut Holes |
|---|---|---|---|---|---|
| sample 1 | 80 | 0.3 | 150 | SCM415 | 1000 |
| sample 2 | | | | | 1450 |
| sample 3 | | | | | 1500 |
| sample 4 | | | | | 1500 |
| sample 5 | | | | | 1300 |
| sample 6 | | | | | 1200 |
| sample 7 | | | | | 300 |
| sample 8 | | | | | 550 |
| sample 9 | | | | | 600 |
| sample 10 | | | | | 700 |
| sample 11 | | | | | 800 |
| sample 12 | | | | | 750 |
| sample 13 | | | | | 600 |

As listed in the above, the angle θ1 for samples 1 to 6 was set in the range of - 18° to 7° (and the angle θ3 therefor was set in the range of 75° to 100°), whereas the angle θ1 for samples 7 to 13 was not set in the range of -18° to 7° (but the angle θ3 therefor was set in the range of 75° to 100°). By the comparison between the test results on samples 1 to 6 and the test results on samples 7 to 13, it was obvious that when the angle θ1 was set in the range of -18° or more and 7° or less (and the angle θ3 was set in the range of 75° or more and 100° or less), the crater wear on the rake face was suppressed and the durability of the drill was improved.

It should be understood that the embodiments disclosed herein have been presented for the purpose of illustration and description but not limited in all aspects. It is intended that the scope of the present invention is not limited to the description above but defined by the scope of the claims and encompasses all modifications equivalent in meaning and scope to the claims.

### REFERENCE SIGNS LIST

10: drill; 10a: front end; 10b: rear end; 10c: outer peripheral surface; 10d: land; 10da: leading edge; 10db: heel; 10dc: first margin; 10dd: second margin; 10de: second chamfer; 10e: land; 10ea: leading edge; 10eb: heel; 10ec: first margin; 10ed: second margin; 10ee: second chamfer; 11: cutting edge; 11a: main cutting edge; 11b: thinning cutting edge; 12: cutting edge; 12a: main cutting edge; 12b: thinning cutting edge; 13: first flank face; 14: second flank face; 15: first flank face; 16: second flank face; 17: flute; 17a: main rake face; 18: flute; 18a: main rake face; 19: thinning face; 19a: thinning heel face; 19b: thinning rake face; 20: thinning face; 20a: thinning heel face; 20b: thinning rake face; 21: oil hole; 22: oil hole; A: central axis; CP: chip; L1, L2, L3, L4: straight line; W: width; WP: workpiece; X: core increment

## Claims

1. A drill rotatable about a central axis, comprising:
a front end and a rear end opposite to each other in a direction along the central axis;
an outer peripheral surface;
a cutting edge formed at the front end and extending from the outer peripheral surface toward the central axis;
a flank face contiguous with the cutting edge;
a flute formed on the outer peripheral surface and extending spirally around the central axis from the front end toward the rear end; and
a thinning rake face contiguous with the flute, wherein
the cutting edge has a main cutting edge extending from the outer peripheral surface and a thinning cutting edge contiguous with an end of the main cutting edge away from the outer peripheral surface,
the flute includes a main rake face contiguous with the main cutting edge from the opposite side of the flank face,
the thinning rake face is contiguous with the thinning cutting edge from the opposite side of the flank face,
the thinning rake face is flush with the main rake face,
an angle formed by the main rake face and the central axis is not less than -18° and not more than 7°, and
the width of the main rake face is 0.07 mm or more and 1.5 mm or less.

2. The drill according to claim 1, wherein
an angle formed by the main rake face and the flank face is not less than 75° and not more than 100°.

3. The drill according to claim 1 or claim 2, wherein
a core increment of the cutting edge is 0.05 times or more and 0.12 times or less the diameter of the drill.

4. The drill according to any one of claims 1 to 3, wherein
the cutting edge is roundly honed, and
the radius of curvature of the cutting edge is 0.015 mm or more and 0.3 mm or less.

5. The drill according to any one of claims 1 to 4, wherein
the drill is used to drill low carbon steel.

6. A drill rotatable about a central axis, comprising:
a front end and a rear end opposite to each other in a direction along the central axis;
an outer peripheral surface;
a cutting edge formed at the front end and extending from the outer peripheral surface toward the central axis;
a flank face contiguous with the cutting edge;
a flute formed on the outer peripheral surface and extending spirally around the central axis from the front end toward the rear end; and
a thinning rake face contiguous with the flute, wherein
the cutting edge has a main cutting edge extending from the outer peripheral surface and a thinning cutting edge contiguous with an end of the main cutting edge away from the outer peripheral surface,
the flute includes a main rake face contiguous with the main cutting edge from the opposite side of the flank face,
the thinning rake face is contiguous with the thinning cutting edge from the opposite side of the flank face,
the thinning rake face is flush with the main rake face,
an angle formed by the main rake face and the central axis is not less than -18° and not more than 7°, and
the width of the main rake face is 0.07 mm or more and 1.5 mm or less,
an angle formed by the main rake face and the flank face is not less than 75° and not more than 100°,
a core increment of the cutting edge is 0.05 times or more and 0.12 times or less the diameter of the drill.
the cutting edge is roundly honed,
the radius of curvature of the cutting edge is 0.015 mm or more and 0.3 mm or less, and
the drill is used to drill low carbon steel.
